(19) Europäisches Patentamt
European Patent Office
Office européen des brevets

(11) **EP 1 782 092 B1**

(12) **EUROPÄISCHE PATENTSCHRIFT**

(45) Veröffentlichungstag und Bekanntmachung des Hinweises auf die Patenterteilung:
**13.06.2012 Patentblatt 2012/24**

(21) Anmeldenummer: **05754117.9**

(22) Anmeldetag: **24.06.2005**

(51) Int Cl.:
*G01S 7/40* (2006.01)        *G01S 13/93* (2006.01)

(86) Internationale Anmeldenummer:
**PCT/EP2005/052974**

(87) Internationale Veröffentlichungsnummer:
**WO 2006/018344 (23.02.2006 Gazette 2006/08)**

(54) **FUNKTIONSÜBERWACHUNG EINES KFZ-RADARSENSORS DURCH RÜCKTRANSFORMATION UND VERGLEICH DER DIGITALEN FFT-DATEN**

MONITORING THE FUNCTION OF A MOTOR VEHICLE RADAR SENSOR BY TRANSFORMING BACK AND COMPARING THE DIGITAL FFT DATA

CONTROLE DU FONCTIONNEMENT D'UN CAPTEUR RADAR D'AUTOMOBILE PAR TRANSFORMATION INVERSE ET COMPARAISON DES DONNEES DE TFR NUMERIQUES

(84) Benannte Vertragsstaaten:
**DE FR GB IT**

(30) Priorität: **17.08.2004 DE 102004039742**

(43) Veröffentlichungstag der Anmeldung:
**09.05.2007 Patentblatt 2007/19**

(73) Patentinhaber: **ROBERT BOSCH GMBH**
**70442 Stuttgart (DE)**

(72) Erfinder:
• **MAYER, Hermann**
**71665 Vaihingen (DE)**
• **LUCAS, Bernhard**
**74354 Besigheim (DE)**
• **HILSEBECHER, Joerg**
**70839 Gerlingen (DE)**
• **HAUK, Joachim**
**71272 Renningen-Malmsheim (DE)**
• **HAFFMANS, Paco**
**71032 Boeblingen (DE)**

(56) Entgegenhaltungen:
**WO-A-99/27385     DE-A1- 4 240 225**

**Beschreibung**

Stand der Technik

Die Erfindung betrifft einen Radarsensor mit einer Sende-und Empfangseinrichtung, einem Analog/Digital-Wandler zur Umwandlung der empfangenen Signale in digitale Daten, einer Speichereinrichtung zur Speicherung der digitalen Daten als Nutzdatensatz, der die digitalen Daten für eine Aufzeichnungsperiode als Funktion der Zeit angibt, einer Transformationseinrichtung zur Berechnung eines Spektrums des Nutzdatensätzes und einer Auswerteeinrichtung zur Auswertung des Spektrums.

Spezieller befaßt sich die Erfindung mit einem Radarsensor, der in einem Kraftfahrzeug eine Komponente eines Fahrerassistenzsystems bildet, beispielsweise eines ACC-Systems (Adaptive Cruise Control) für eine automatische, radargestützte Abstandsregelung.

Ein typisches Beispiel für einen Radarsensor der oben genannten Art ist ein FMCW-Radar (Frequency Modulated Continuous Wave), bei dem die Frequenz des gesendeten Radarsignals periodisch mit einer bestimmten Rampensteigung moduliert wird. Die Frequenz eines Signals, das an einem Radarziel reflektiert wurde und dann zu einem bestimmten Zeitpunkt wieder von der Radarantenne empfangen wird, unterscheidet sich von der Frequenz des zu diesem Zeitpunkt gesendeten Signals somit durch einen Betrag, der einerseits von der Signallaufzeit und damit vom Abstand des Radarziels und andererseits von der Dopplerverschiebung und damit von der Relativgeschwindigkeit des Radarziels abhängig ist. Im Radarsensor wird das empfangene Signal in einem Mischer mit dem zu diesem Zeitpunkt gesendeten Signal gemischt, so daß man durch Schwebung ein niederfrequentes Signal erhält, dessen Frequenz dem Frequenzunterschied zwischen dem gesendeten und dem empfangenen Signal entspricht. Dieses niederfrequente Signal wird dann im Analog/Digital-Wandler mit einer geeigneten Zeitauflösung digitalisiert. Die digitalisierten Daten werden über eine bestimmte Aufzeichnungsperiode aufgezeichnet, die beispielsweise der Länge der Rampe entspricht, mit der das gesendete Signal moduliert wird. Aus dem so erhaltenen Datensatz wird dann durch einen Algorithmus, der als "schnelle Fourier-Transformation" (FFT) bekannt ist, ein Spektrum gebildet. In diesem Spektrum wird jedes erfaßte Radarziel durch einen Peak repräsentiert, der sich mehr oder weniger deutlich vom Rauschpegel abhebt. Durch Wiederholung dieser Prozedur mit unterschiedlichen Rampensteigungen ist es möglich, die Mehrdeutigkeit zwischen der laufzeitbedingten Frequenzverschiebung und der Dopplerverschiebung zu beseitigen, so daß sich der Abstand und die Relativgeschwindigkeit des Radarziels berechnen lassen.

In Kraftfahrzeugen wird zumeist ein winkelauflösender Radarsensor eingesetzt, der mehrere leicht gegeneinander winkelversetzte Radarkeulen erzeugt, und die oben beschriebene Signalaufbereitung und -auswertung erfolgt dann gesondert für jede einzelne Radarkeule, vorzugsweise in parallelen Kanälen.

Damit die georteten Radarziele mit hoher zeitlicher Auflösung verfolgt werden können, sollte die digitale Datenverarbeitung mit möglichst hoher Bitrate erfolgen. Dabei kann das gelegentliche Auftreten von Fehlern nicht ganz ausgeschlossen werden. Solche Fehler können nicht nur dadurch entstehen, daß das empfangene Radarsignal verrauscht ist, sondern beispielsweise auch dadurch, daß elektromagnetische Störsignale in die Auswerteelektronik eingestreut werden oder einzelne Datenbits bei der Datenübertragung und -verarbeitung verfälscht werden (bit aliasing). Weitere Fehlerquellen sind Softwarefehler oder Hardwarefehler, die sich unter Umständen nur sporadisch, unter ungünstigen Umständen bemerkbar machen und deshalb bei der Qualitätskontrolle übersehen wurden.

Aus Gründen der Verkehrssicherheit sollte der Radarsensor eine möglichst verläßliche Ortung von anderen Fahrzeugen und sonstigen Hindernissen ermöglichen. Weiterhin gibt es Bestrebungen, die Funktionalität von Fahrerassistenzsystemen zu erweitern, bis hin zu einer vollständig autonomen Fahrzeugsteuerung als Fernziel. In dem Maße, in dem dem Fahrerassistenzsystem neue und zunehmend komplexere Aufgaben übertragen werden, steigen auch die Anforderungen an die Verläßlichkeit des Radarsensors.

Aus der DE 42 40 225 A1 ist ein Verfahren zur Generierung einer Korrekturfunktion für eine Eliminierung von Phasen- und Amplitudenfehlern eines komprimierten Signals bekannt, bei dem eine erste Referenzfunktion und eine Referenzfunktion nach der Optimalfiltertheorie erzeugt werden. Ferner werden die Referenzfunktionen des Idealfilters bzw. des Optirrialfilters fouriertransformiert; der Reziprokwert des einen fouriertransformierten Signals wird mit dem anderen fouriertransformierten Signal multipliziert, und das durch die Multiplikation erhaltene Signal wird zur Erzeugung einer Korrekturfunktion im Zeitbereich einer inversen Fourier-Transformation unterzogen.

Aus der WO 99/27385 ist ein Vorwärtssichtsensor für Kraftfahrzeuge bekannt, welcher eine Sendeantenne zum Aussenden eines ersten Hochfrequenzsignals und eine Empfangsantenne zum Empfang eines zweiten Hochfrequenzsignals enthält, wobei das zweite Hochfrequenzsignal einen Anteil des ersten Hochfrequenzsignals enthält und weiterhin einen Empfänger enthält, der mit der Empfangsantenne gekoppelt ist und in der Lage ist ein Signal entsprechend einer Antennenblockade zu detektieren.

Vorteile der Erfindung

Die Erfindung mit den in Anspruch 1 angegebenen Merkmalen schafft einen Radarsensor mit verbesserter Zuverlässigkeit.

Dies wird erfindungsgemäß dadurch erreicht, daß zusätzlich zu der Transformationseinrichtung, mit der beispielsweise durch schnelle Fourier-Transformation das Spektrum berechnet wird, eine Rücktransformationseinrichtung vorgesehen ist, die das berechnete Spektrum wieder in eine zeitabhängige Funktion zurücktransformiert. Wenn sowohl die Transformation als auch die Rücktransformation fehlerfrei ablaufen, sollte der durch die Rücktrarisformation gewonnene digitale Datensatz, hier als Vergleichsdatensatz bezeichnet, mit dem ursprünglichen Nutzdatensatz identisch sein, aus dem das Spektrum berechnet wurde. Erfindungsgemäß wird deshalb in einer Vergleichseinrichtung der Nutzdatensatz mit dem Vergleichsdatensatz verglichen, und nur wenn beide Datensätze hinreichend genau übereinstimmen, wird das von der Transformationseinrichtung berechnete Spektrum als gültiges Spektrum an die Auswerteeinrichtung weitergeleitet. Andernfalls wird auf das Vorliegen eines Fehlers geschlossen und eine entsprechende Fehlerbehandlungsroutine eingeleitet.

In dem erfindungsgemäßen Radarsensor ist somit eine Art Selbsttestfunktion implementiert, mit der der gesamte Verarbeitungsstrang zwischen dem Analog/Digital-Wandler und der Auswerteeinrichtung auf Fehlerfreiheit überwacht werden kann. So können während des Betriebs des Radarsensors in diesem Verarbeitungsstrang auftretende Fehler sofort erkannt werden, und es können geeignete Gegenmaßnahmen eingeleitet werden, um eine Fehlfunktion des Fahrerassistenzsystems zu vermeiden.

Vorteilhafte Ausgestaltungen der Erfindung sind in den Unteransprüchen angegeben.

Für die Verarbeitung der vom Analog/Digital-Wandler gelieferten Daten ist üblicherweise eine digitale Datenverarbeitungseinrichtung, beispielsweise ein Mikrorechner vorgesehen, in dem die Transformationseinrichtung als Softwaremodul implementiert ist, beispielsweise als Algorithmus für die schnelle Fourier-Transformation. Auch die Rücktransformation kann als Softwaremodul implementiert werden, das auf derselben Hardware läuft wie die ursprüngliche Fourier-Transformation. Vorzugsweise wird für die Rücktransformation jedoch eine Hardware benutzt, die von der Hardware für die Transformationseinrichtung unabhängig ist. Beispielsweise kann als Transformationseinrichtung für die schnelle Fourier-Transformation ein digitaler Digitalprozessor (DSP) verwendet werden, während für die Rücktransformation ein anderer Prozessor, z.B. ein Mikrocontroller benutzt wird, der daneben auch noch andere Funktionen innerhalb des Radarsensors, z.B. Steuerungsfunktionen ausführen kann. Durch die so erreichte Unabhängigkeit der Hardware ist sichergestellt, daß auch Hardwarefehler in der Transformationseinrichtung sicher erkannt werden können.

Mathematisch ist die Rücktransformation, z.B. eine inverse Fourier-Transformation, mit der ursprünglichen Fourier-Transformation eng verwandt, weil für die Wirkung eines Fourier-Transformationsoperators F auf eine zeitabhängige Funktion f(t) die Beziehung gilt:

$$F(F(f(t))) = k \cdot f(-t), \text{ mit einem geeigneten Normierungsfaktor } k$$

Im Prinzip wäre es daher möglich, für die Rücktransformation denselben Algorithmus zu verwenden, mit dem auch die ursprüngliche Fourier-Transformation ausgeführt wird. Bevorzugt wird jedoch für die Rücktransformation ein spezieller Algorithmus eingesetzt, der von dem Algorithmus für die ursprüngliche Fourier-Transformation unabhängig ist. Dadurch ist gewährleistet, daß auch Softwarefehler erkannt werden können.

Die Fehlerbehandlung, die bei Nichtübereinstimmung des Vergleichsdatensatzes mit dem Nutzdatensatz eingeleitet wird, besteht im einfachsten Fall darin, daß das betreffende Spektrum verworfen wird. Da die Radarortung periodisch in kurzen Zeitintervallen, beispielsweise in Abständen von 1 ms, wiederholt wird, kann der Ausfall des Ergebnisses aus einem einzelnen Meßzyklus in der Regel toleriert werden, sofern sichergestellt ist, daß das fehlerhafte Erlebnis nicht für die Verfolgung der Radarziele benutzt wird.

In einer bevorzugten Ausführungsform ist jedoch die Vergleichseinrichtung so ausgebildet, daß sie die Ereignisse zählt, bei denen das Spektrum als ungültig verworfen wird. Wenn solche Ereignisse gehäuft auftreten, beispielsweise innerhalb eines vorgegebenen Zeitintervalls mit einer Häufigkeit, die oberhalb eines bestimmten Schwellenwertes liegt, so deutet dies auf einen Systemfehler hin, und die Fehlerbehandlung besteht dann darin, daß eine Fehlermeldung an den Fahrer ausgegeben wird und/ oder ein Reset und Neustart des Systems ausgeführt wird oder, wenn auch ein Neustart nicht erfolgreich ist, das System ganz abgeschaltet wird.

Zeichnung

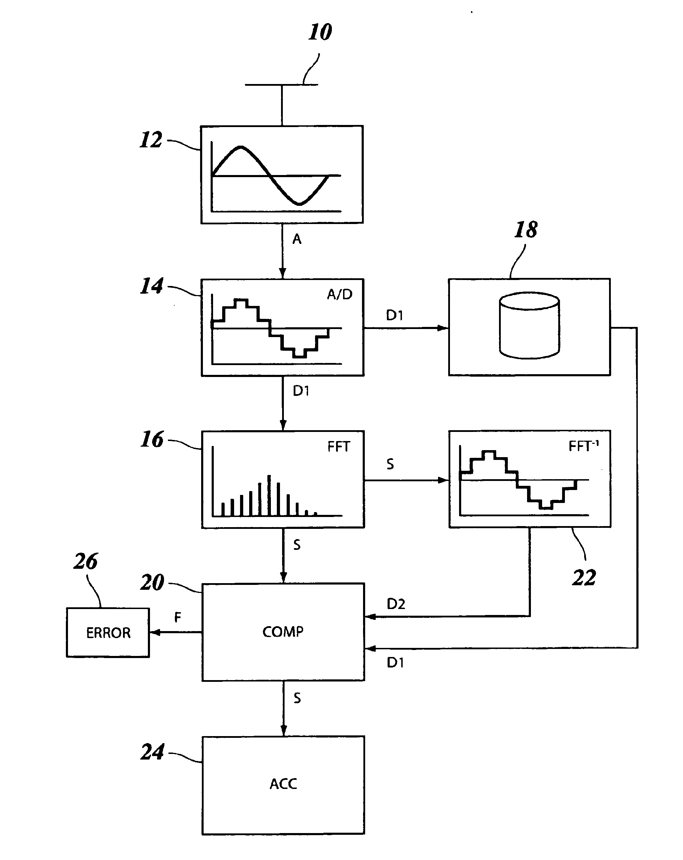

Ein Ausführungsbeispiel der Erfindung ist in der Zeichnung dargestellt und in der nachfolgenden Beschreibung näher erläutert.

Die einzige Zeichnungsfigur zeigt ein Blockdiagramm eines erfindungsgemäßen Radarsensors.

Beschreibung des Ausführungsbeispiels

Der in der Zeichnung als Blockdiagramm dargestellte Radarsensor weist als Sende- und Empfangseinrichtung eine Antenne 10 mit einem zugehörigen Mischer 12 auf, der als Meßsignal ein niederfrequentes Analogsignal A liefert. In einem Analog/Digital-Wandler 14 wird das Analogsignal A digitalisiert. Die so erhaltenen digitalen Daten werden innerhalb jedes Meßzyklus des Radarsensors über eine vorgegebene Aufzeichnungszeitspanne aufgezeichnet, so daß man einen digitalen Nutzdatensatz D1 erhält, der den zeitlichen Verlauf des Meßsignals während der Aufzeichnungszeitspanne wiedergibt.

In einer Transformationseinrichtung 16 wird der Nutzdatensatz D1 einer schnellen Fourier-Transformation unterzogen. Parallel dazu wird der Nutzdatensatz D1 in einer Speichereinrichtung 18 temporär gespeichert.

Die Transformationseinrichtung 16 wird beispielsweise durch einen digitalen Signalprozessor gebildet, in dem ein Algorithmus für die schnelle Fourier-Transformation implementiert ist. Das Ergebnis der Fourier-Transformation ist ein Spektrum S, das an eine Vergleichseinrichtung 20 weitergeleitet wird.

Die Transformationseinrichtung 16 gibt das Spektrum S auch an eine Rücktransformationseinrichtung 22 aus, die durch einen separaten Prozessor, beispielsweise einen Mikrocontroller des Radarsensors gebildet wird. In diesem Mikrocontroller ist ein Algorithmus für eine inverse Fourier-Transformation implementiert, und dieser Algorithmus ist von dem in der Transformationseinrichtung 16 verwendeten Algorithmus unabhängig.

Das Ergebnis der Rücktransformation ist ein digitaler Vergleichsdatensatz D2, der wieder den zeitlichen Verlauf des Meßsignals während der Aufzeichnungszeitspanne angibt und der, wenn alle Transformationen korrekt ausgeführt wurden, mit dem Nutzdatensatz D1 identisch sein sollte. Die Vergleichseinrichtung 20 vergleicht den Vergleichsdatensatz D2 mit dem Nutzdatensatz D1, der in der Speichereinrichtung 18 zwischengespeichert wurde. Wenn die beiden Datensätze übereinstimmen, leitet die Vergleichseinrichtung 20 das Spektrum S als gültiges Spektrum an eine Auswerteeinrichtung 24 weiter, beispielsweise an einen ACC-Regler für die automatische Abstandsregelung in einem Kraftfahrzeug.

Da die Ergebnisse der Transformationen in der Transformationseinrichtung 16 und in der Rücktransformationseinrichtung 22 jeweils nur Näherungen an das mathematisch korrekte Ergebnis darstellen, werden in der Praxis auch dann, wenn alle Berechnungen korrekt durchgeführt wurden, der Nutzdatensatz D1 und der Vergleichsdatensatz D2 nicht vollkommen identisch sein. Als Kriterium für eine hinreichende Übereinstimmung zwischen diesen Datensätzen kann in der Vergleichseinrichtung 20 beispielsweise überprüft werden, ob die Summe der quadratischen Abweichungen zwischen den beiden Datensätzen unterhalb eines bestimmten Schwellenwertes liegt oder ob die Abweichungen für jeden Zeitpunkt innerhalb einer bestimmten Bandbreite liegen.

Wenn nach diesem Kriterium keine hinreichende Übereinstimmung zwischen dem Nutzdatensatz D1 und dem Vergleichsdatensatz D2 besteht, wird das Spektrum S nicht an die Auswerteeinrichtung 24 weitergeleitet, sondern verworfen, und gleichzeitig wird ein Fehlersignal F an eine Fehlerbehandlungseinrichtung 26 ausgegeben.

Die Fehlerbehandlungseinrichtung 26 berechnet fortlaufend einen gleitenden Mittelwert für die Fehlerhäufigkeit, und wenn die Fehlerhäufigkeit oberhalb eines bestimmten Schwellenwertes liegt, bewirkt sie einen Reset und Neustart der gesamten Auswerteelektronik des Radarsensors. Gleichzeitig kann an den Fahrer ein Warnsignal ausgegeben werden, das ihn darauf hinweist, daß das ACC-System zur Zeit nicht zur Verfügung steht. Wenn auch der Neustart oder wiederholte Neustartversuche nicht erfolgreich sind, bewirkt die Fehlerbehandlungseinrichtung 26 eine vollständige Abschaltung des ACC-Systems, und der Fahrer erhält auf einem Display eine Aufforderung, eine Werkstatt aufzusuchen.

Die Funktionen der Vergleichseinrichtung 20 und der Fehlerbehandlungseinrichtung 26 können beispielsweise von dem Mikrocontroller ausgeführt werden, der auch die Funktion der Rücktransformationseinrichtung 22 ausführt.

**Patentansprüche**

1. Radarsensor mit einer Sende- und Empfangseinrichtung (10, 12), einem Analog/Digital-Wandler (14) zur Umwandlung der empfangenen Signale (A) in digitale Daten, einer Speichereinrichtung (18) zur Speicherung der digitalen Daten als Nutzdatensatz (D1), der die digitalen Daten für eine Aufzeichnungsperiode als Funktion der Zeit angibt, einer Transformationseinrichtung (16) zur Berechnung eines Frequenzspektrums (S) des Nutzdatensatzes und einer Auswerteeinrichtung (24) zur Auswertung des Frequenzspektrums, **gekennzeichnet durch** eine Rücktrahsformationseinrichtung (22) zur Rücktransformation des Frequenzspektrums (S) in den Zeitbereich in einen digitalen Vergleichsdatensatz (D2) und eine Vergleichcheinrichtung (20), die dazu ausgebildet ist, die Übereinstimmung zwischen dem Nutzdatensatz (D1) und dem Vergleichsdatensatz (D2) zu bewerten und bei Übereinstimmung das Frequenzspektrum (S) an die Auswerteeinrichtung (24) weiterzuleiten und bei Nichtübereinstimmung eine Fehlerbehandlung einzuleiten.

2. Radarsensor nach Anspruch 1, **dadurch gekennzeichnet, daß** die Transformationseinrichtung (16) und die Rücktransformationseinrichtung (22) durch getrennte Hardwarekomponenten gebildet werden.

3. Radarsensor nach Anspruch 1 oder 2, **dadurch gekennzeichnet, daß** in der Transformationseinrichtung (16) und in der Rücktransformationseinrichtung (22) voneinander unabhängige Transformationsalgorithmen implementiert sind indem als Transformationseinrichtung (16) ein digitaler Signalprozessor und als Rücktransformationseinrichtung (22) ein anderer Prozessor, insbesondere ein Mikrocontroller, benutzt wird.

4. Radarsensor nach einem der vorstehenden Ansprüche, **dadurch gekennzeichnet, daß** die Vergleichseinrichtung (20) dazu ausgebildet ist, bei Nichtübereinstimmung des Nutzdatensatzes (D1) mit dem Vergleichsdatensatz (D2) das Frequenzspektrum (S) zu verwerfen.

5. Radarsensor nach einem der vorstehenden Ansprüche, **dadurch gekennzeichnet, daß** die Vergleichseinrichtung (20) dazu ausgebildet ist, bei Nichtübereinstimmung des Nutzdatensatzes (D1) mit dem Vergleichsdatensatz (D2) ein Fehlersignal (F) an eine Fehlerbehandlungseinrichtung (26) auszugeben.

6. Radarsensor nach Anspruch 5, **dadurch gekennzeichnet, daß** die Fehlerbehandlungseinrichtung (26) dazu ausgebildet ist, den Radarsensor abzuschalten oder neu zu starten und/oder eine Warnmeldung auszugeben, wenn die Fehlerhäufigkeit oberhalb eines bestimmten Schwellenwertes liegt.

**Claims**

1. Radar sensor having a transmitter device (10) and a receiver device (12), an analogue/digital converter (14) for converting the received signals (A) into digital data, a memory device (18) for storing the digital data as a useful data record (D1) which indicates the digital data for a recording period as a function of time, a transmission device (16) for calculating a frequency spectrum (S) of the useful data record and an evaluation device (24) for evaluating the frequency spectrum **characterized by** a backtransformation device (22) for transforming the frequency spectrum (S) back into the time domain into a digital comparison data record (D2), and a comparator device (20) which is designed to evaluate the correspondence between the useful data record (D1) and the comparison data record (D2) and to pass on the frequency spectrum (S) to the evaluation device (24) when they correspond and to initiate troubleshooting when they do not correspond.

2. Radar sensor according to Claim 1, **characterized in that** the transformation device (16) and the backtransformation device (22) are formed by separate hardware components.

3. Radar sensor according to Claim 1 or 2, **characterized in that** transformation algorithms which are independent of one another are implemented in the transformation device (16) and in the backtransformation device (22) by virtue of the fact that a digital signal processor is used as a transformation device (16) and another processor, in particular a microcontroller, is used as the back transformation device (22).

4. Radar sensor according to one of the preceding claims, **characterized in that** the comparator device (20) is designed to reject the frequency spectrum (S) when the useful data record (D1) does not correspond to the comparison data record (D2).

5. Radar sensor according to one of the preceding claims, **characterized in that** the comparator device (20) is designed to output a fault signal (F) to a troubleshooting device (26) when the useful data record (D1) does not correspond to the comparison data record (D2).

6. Radar sensor according to Claim 5, **characterized in that** the troubleshooting device (26) is designed to switch off or restart the radar sensor and/or output a warning message if the error frequency is above a specific threshold value.

**Revendications**

1. Capteur radar muni d'un dispositif d'émission et de réception (10, 12), d'un convertisseur analogique/numérique (14) pour convertir les signaux reçus (A) en données numériques, d'un dispositif de mémorisation (18) pour enregistrer les données numériques sous la forme d'un jeu de données utiles (D1), lequel indique les données numériques en fonction du temps pour une période d'enregistrement, d'un dispositif de transformée (16) pour calculer un spectre de fréquences (S) du jeu de données utiles et d'un dispositif d'interprétation (24) pour interpréter le spectre de fréquences, **caractérisé par** un dispositif de transformée inverse (22) pour effectuer la transformée inverse du spectre de fréquences (S) dans la plage de temps en un jeu de données comparatives numériques (D2) et un dispositif de comparaison (20) qui est configuré pour évaluer la concordance entre le jeu de données utiles (D1) et le jeu de données comparatives (D2) et, en cas de concordance, transférer le spectre de fréquences (S) au dispositif d'interprétation (24) et, en cas de non concordance, initier un traitement d'erreur.

2. Capteur radar selon la revendication 1, **caractérisé en ce que** le dispositif de transformée (16) et le dispositif de transformée inverse (22) sont formés par des composants physiques séparés.

3. Capteur radar selon la revendication 1 ou 2, **caractérisé en ce que** des algorithmes de transformée indépendants les uns des autres sont mis en oeuvre dans le dispositif de transformée (16) et dans le dispositif de transformée inverse (22) **en ce que** le dispositif de transformée (16) utilisé est un processeur de signal numérique et le dispositif de transformée inverse (22) utilisé est un autre processeur, notamment un microcontrôleur.

4. Capteur radar selon l'une des revendications précédentes, **caractérisé en ce que** le dispositif de comparaison (20) est configuré, en cas de non concordance du jeu de données utiles (D1) avec le jeu de données comparatives (D2), pour rejeter le spectre de fréquences (S).

5. Capteur radar selon l'une des revendications précédentes, **caractérisé en ce que** le dispositif de comparaison (20) est configuré, en cas de non concordance du jeu de données utiles (D1) avec le jeu de données comparatives (D2), pour délivrer un signal d'erreur (F) à un dispositif de traitement des erreurs (26).

6. Capteur radar selon la revendication 5, **caractérisé en ce que** le dispositif de traitement des erreurs (26) est configuré pour déconnecter le capteur radar ou le faire redémarrer et/ou délivrer un message d'alerte lorsque la fréquence des erreurs est supérieure à une valeur de seuil donnée.

**IN DER BESCHREIBUNG AUFGEFÜHRTE DOKUMENTE**

**In der Beschreibung aufgeführte Patentdokumente**

- DE 4240225 A1
- WO 9927385 A